# FASCICULE DE BREVET EUROPEEN

(11) **EP 1 001 875 B1**
(45) Date de publication et mention de la délivrance du brevet: **04.09.2002**
(21) Numéro de dépôt: 99923657.3
(22) Date de dépôt: 03.06.1999
(51) Int. Cl.: B29D 24/00

(54) **PROCEDE DE REALISATION D'UN PANNEAU DE STRUCTURE COMPOSITE RENFORCEE DU TYPE SANDWICH A AME ALVEOLAIRE ET PANNEAU REALISE SELON UN TEL PROCEDE**
VERFAHREN ZUR HERSTELLUNG EINER SANDWICHVERBUNDPLATTE MIT WABENFÖRMIGEM KERN UND EINE SO HERGESTELLTE PLATTE
METHOD FOR MAKING A SANDWICH-TYPE REINFORCED COMPOSITE STRUCTURAL PANEL WITH ALVEOLATE CORE AND RESULTING PANEL

(30) Priorité: 05.06.1998 FR 9807075
(43) Date de publication de la demande: 24.05.2000
(73) Titulaire: PEGUFORM FRANCE, 27950 Saint Marcel (FR)
(72) Inventeur: HOCHET, Nicolas, F-49500 La Chapelle-sur-Oudon (FR); VENDANGEOT, Francis, F-44110 Châteaubriant (FR)
(74) Mandataire: Le Forestier, Eric
(86) Numéro de dépôt international: FR9901302
(87) Numéro de publication internationale: WO99064224

(56) Documents cités:
- EP-A- 0 473 422
- EP-A- 0 551 776
- EP-A- 0 649 736
- EP-A- 0 783 959
- WO-A-88/03086
- FR-A- 2 436 675

## Description

La présente invention concerne de manière générale les panneaux de structure composite du type sandwich à âme alvéolaire notamment pour véhicules automobiles, et plus particulièrement un procédé pour réaliser un tel panneau à structure localement renforcée.

Elle, concerne également un panneau de structure composite renforcée du type sandwich à âme alvéolaire, réalisé selon un tel procédé.

Les panneaux de type sandwich à âme alvéolaire présentent des caractéristiques très importantes eu égard à leur poids.

De manière classique, la construction de tels panneaux consiste à emprisonner par collage ou soudure une âme alvéolaire de faibles caractéristiques mécaniques entre deux peaux présentant une épaisseur beaucoup plus faible que celle de l'âme alvéolaire mais possédant d'excellentes caractéristiques mécaniques.

On connaît du document FR 2 711 573 (EP 0 649 736) appartenant à la Demanderesse, un procédé pour réaliser un panneau de structure composite du type sandwich à âme alvéolaire, selon lequel on réalise ledit panneau en une seule étape, par pressage dans un moule à froid, d'un empilement constitué d'au moins une première peau en matériau thermoplastique renforcé estampable, d'une âme alvéolaire en matériau thermoplastique, d'une deuxième peau en matériau thermoplastique renforcé estampable, et d'une première couche de revêtement externe en matériau tissé ou non tissé, lesdites peaux étant préalablement chauffées hors du moule à une température de ramollissement.

Un tel procédé est particulièrement avantageux dans le fait qu'il permet en une seule opération de générer la cohésion entre les différentes couches de structure composite et de conformer ledit panneau.

Le panneau ainsi réalisé conserve toutes les propriétés mécaniques dues à la structure sandwich à âme alvéolaire.

Les panneaux de structure composite du type sandwich à âme alvéolaire présentent des caractéristiques de rigidité suffisante permettant de renforcer structurellement des structures mécaniques soumises à des contraintes importantes sans pour cela trop les alourdir. De tels panneaux sont alors couramment utilisés dans les secteurs de la construction navale, aéronautique et ferroviaire.

Toutefois, l'hétérogénéité des sollicitations mécaniques qu'ils subissent nécessite parfois la mise en oeuvre de plis de renfort locaux aux endroits desdits panneaux où les sollicitations mécaniques sont les plus fortes.

Dans le domaine de l'aéronautique, les panneaux composites à structure sandwich sont réalisés à base de résines thermodurcissables renforcées par des fibres de verre.

Afin de donner et de maintenir la forme souhaitée desdits panneaux, les fibres de verre et la résine thermodurcissable se présentant sous la forme de pré-imprégnés, sont déposées couche par couche dans un moule, puis sont ensuite portées à des températures élevées pour polymériser de façon définitive la résine.

Les moules utilisés peuvent comporter un poinçon ou une matrice ou encore un poinçon et une matrice.

La démarche quant à la réalisation de tels panneaux renforcés localement, consiste tout d'abord à définir par des essais réels ou des simulations informatiques les zones de concentration des contraintes sur les panneaux à réaliser, puis à ces endroits à ajouter des plis de renforts qui permettrons de résister à de telles sollicitations.

Les plis de renforts sont des mats unidirectionnels ou des tissus de fibres de verre, de carbone ou naturelles noyées dans un résine thermodurcissable, avec une orientation qui est déterminée par l'orientation des sollicitations. Il sont découpés selon un patron à l'aide de machines spéciales par exemple une machine de découpe à jet d'eau.

Les plis de renfort sont disposés couche par couche dans un moule, manuellement ou à l'aide d'un robot avec une orientation propre à chaque pli.

C'est l'opération de drapage.

Vient alors l'étape de cuisson qui est l'étape la plus longue du procédé de réalisation de telles pièces puisqu'il s'agit de chauffer suffisamment la superposition des couches pour polymériser la résine thermodurcissable.

Les différentes couches déposées dans le moule sont pressées dans ledit moule en faisant le vide dans celui-ci. La réalisation du vide permet de plaquer les matériaux contre la matrice ou le poinçon et permet d'évacuer le surplus de résine.

On obtient ainsi la forme voulue avec la meilleure imprégnation possible des fibres par la résine.

Cette technique dite de stratification, et en particulier l'opération de drapage, se caractérise par un niveau d'automatisation très faible, et une part de main d'oeuvre très importante.

Si grâce au concept de localisation de la rigidité, cette technique permet d'atteindre des niveaux de performance élevés des pièces ainsi réalisées, elle nécessite un suivi rigoureux de la qualité.

En conséquence, cette technique est très coûteuse et ne peut être utilisée aux grandes cadences de production mises en oeuvre dans le domaine de l'industrie automobile.

La présente invention propose alors un nouveau procédé pour réaliser de manière simple et économique des panneaux de structure composite renforcée ou type sandwich à âme alvéolaire, qui peut être mis en oeuvre à cadence élevée compatible avec les cadences de production de l'industrie automobile tout en permettant la réalisation de pièces adaptées aux applications structurelles qui sollicitent leur rigidité sans surpoids et sans surcoût particulier.

Plus particulièrement, l'invention propose un procédé pour réaliser un panneau de structure composite renforcée du type sandwich à âme alvéolaire, caractérisé en ce que :
- on réalise au moins un empilement d'au moins une première peau en matériau thermoplastique renforcé, un premier pli de renfort en matériau thermoplastique renforcé, une âme alvéolaire en matériau thermoplastique, un second pli de renfort en matériau thermoplastique renforcé, une seconde peau en matériau thermoplastique renforcé, les premier et second plis de renfort présentant une surface inférieure à celle des première et seconde peaux et étant positionnés de manière symétrique par rapport au plan formé par l'âme alvéolaire, à des endroits déterminés contre lesdites peaux,
- on pré-assemble l'empilement,
- on chauffe l'empilement pré-assemblé dans un four, et
- on forme ledit panneau par pressage dudit empilement chauffé dans un moule à froid sous une pression comprise entre 1 et 3.10⁶Pa.

Selon d'autres caractéristiques avantageuses et non limitatives du procédé conforme à la présente invention :
- ledit empilement peut comporter au moins une autre paire de troisième et quatrième plis de renfort, présentant chacun une surface inférieure à celle des première et deuxième peaux, et disposés symétriquement de part et d'autre de l'âme alvéolaire à d'autres endroits déterminés contre lesdites peaux,
- l'empilement peut comporter trois paires de plis de renfort agencés de manière déterminée, symétriquement de part et d'autre de l'âme alvéolaire,
- l'empilement peut comporter également au moins une couche de revêtement externe en matériau tissé ou non tissé disposée sur la seconde peau et éventuellement une autre couche de revêtement externe en matériau tissé ou non tissé placée sous la première peau dans l'ordre d'empilage.

Avantageusement, la pression de formage du panneau est comprise entre 15 et 20.10⁵ Pa.

Lors du formage dudit panneau, les première et deuxième peaux présentent une température de formage comprise entre 160 et 200 degrés environ.

Les première et deuxième peaux sont constituées par un tissu ou un mat de fibres de verre et d'un matériau thermoplastique.

Les plis de renfort sont également constitués par un tissu ou un mat de fibres de verre d'un matériau thermoplastique.

Les première et deuxième peaux présentent préférentiellement un grammage de fibres de verre différent de celui des plis de renfort.

Le matériau thermoplastique utilisé est une polyoléfine de préférence du polypropylène.

De préférence, l'âme alvéolaire présente une structure d'alvéoles ouvertes du type structure tubulaire ou nid d'abeilles constituée principalement de polyoléfine et de préférence de polypropylène.

L'invention propose également un panneau de structure composite renforcée du type sandwich à âme alvéolaire, réalisé selon le procédé précité.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique de côté de l'empilement réalisé conformément au procédé selon l'invention.
- les figures 2a à 2g présentent des vues schématiques de dessus d'éprouvettes d'essais réalisées conformément au procédé selon l'invention.

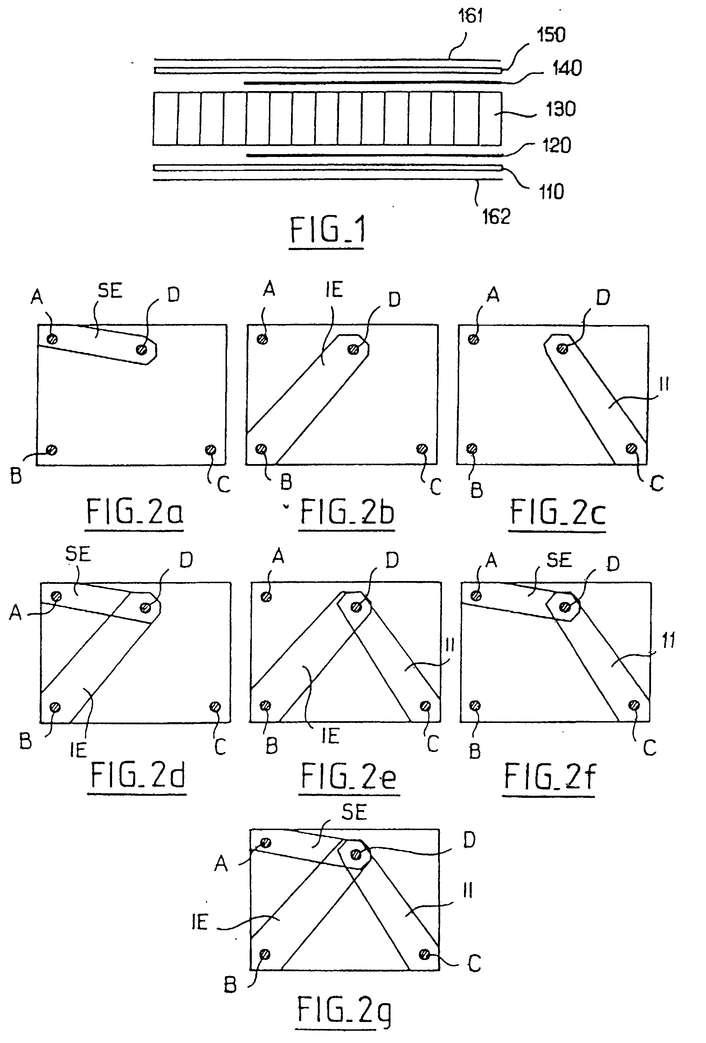

Sur la figure 1, on a représenté un empilement réalisé lors d'une première étape d'un procédé pour réaliser un panneau de structure composite renforcée du type sandwich à âme alvéolaire.

Cet empilement comporte ici successivement une première peau 110 en matériau thermoplastique renforcé, un premier pli de renfort 120 en matériau thermoplastique renforcé, une âme alvéolaire 130 en matériau thermoplastique, un second pli de renfort 140 en matériau thermoplastique renforcé, et une seconde peau 150 en matériau thermoplastique renforcé.

En outre, il comporte une couche de revêtement exteme 161 en matériau tissé ou non tissé disposé sur la seconde peau 150 et une autre couche de revêtement externe 162 en matériau tissé ou non tissé placée sous la première peau 110 dans l'ordre d'empilage.

Les couches de revêtement externe 161, 162 peuvent être un feutre ou une moquette.

Les premier et second plis de renfort 120, 140 présentent une surface inférieure à celle des première et seconde peaux 110,150 et sont positionnés de manière symétrique par rapport au plan formé par l'âme alvéolaire à des endroits déterminés contre lesdites peaux.

Plus particulièrement, ils sont positionnés aux endroits prédéterminés du panneau où il est prévu qu'il subisse les sollicitations mécaniques les plus intenses.

Selon des variantes de réalisation, on peut prévoir que l'empilement comporte une autre paire de troisième et quatrième plis de renfort présentant chacun une surface inférieure à celle des première et deuxième peaux, et disposés symétriquement de part et d'autre de l'âme alvéolaire à d'autres endroits déterminés contre lesdites peaux.

De même, l'empilement peut comporter trois paires de plis de renfort agencées de manière déterminée, symétriquement de part et d'autre de l'âme alvéolaire. Selon d'autres variantes, l'empilement peut comprendre un nombre de plis de renfort encore plus important.

Les première et deuxième peaux 110, 150 sont constituées par un tissu ou un mat de fibres de verre et d'un matériau thermoplastique.

Les plis de renfort 120, 140 sont également constitués par un tissu ou un mat de fibres de verre et d'un matériau thermoplastique.

Le matériau thermoplastique utilisé est une polyoléfine et de préférence du polypropylène.

L'adjonction de plis de renfort dans cet empilement entraîne automatiquement une augmentation de poids du panneau de structure ainsi réalisé.

Afin de limiter cette augmentation de poids, il est indispensable que l'adjonction de ces plis de renfort soit parfaitement maîtrisée et qu'il ne soit adjoint que le juste nécessaire.

La neutralisation du poids supplémentaire des plis de renfort doit s'opérer de manière simultanée par la réduction du grammage de fibres de verre des première et seconde peaux utilisées ; en combinant astucieusement le grammage de fibres de verres des peaux avec les caractéristiques des plis de renfort, on peut obtenir un panneau de poids équivalent à celui n'utilisant pas de plis de renfort, présentant une rigidité plus adaptée à son application structurelle.

Ainsi, les première et seconde peaux 110, 150 présentent un grammage de fibres de verre différent de celui des plis de renfort 120, 140.

Les matériaux utilisés pour les première et seconde peaux ainsi que les plis de renfort de l'empilement, sont par exemple : un textile 4x1 qui comprend quatre fils de chaîne pour un fil de trame avec 800 filaments/fils, un textile 8x2 qui comprend également quatre fils de chaîne pour un fil de trame, chaque fil étant composé de 1600 filaments, un textile équilibré qui comprend autant de fils de trame que de fils de chaîne, un mat de fibres longues dont les directions sont équilibrées, un mat de fibres longues avec une orientation préférentielle pour 80 % des fibres longues (mat directionnel) ou encore un unidirectionnel. Les grammages à disposition sont par exemple pour un textile 4x1 : 400 g/m², pour un textile 8x2 : 900 g/m², ou 1350 g/m², pour un textile équilibré : 710 g/m² ou 1420 g/m², pour un mat équilibré : 1500 g/m², pour un mat directionnel: 500g/m² et pour un unidirectionnel : 800 g/m².

L'âme alvéolaire 130 présente ici, avantageusement une structure d'alvéoles ouvertes du type structure tubulaire ou nid d'abeilles, constituée principalement de polyoléfine et de préférence de polypropylène.

Selon une deuxième étape du procédé conforme à l'invention, on pré-assemble l'empilement. Puis, on chauffe l'empilement pré-assemblé dans un four.

Le chauffage de l'empilement pré-assemblé est réalisé de telle manière que les première et deuxième peaux 110, 150 de l'empilement présentent une température de formage comprise 160 et 200 degrés environ.

A ce sujet, il est intéressant de noter que les températures de chauffage de l'empilement pré-assemblé sont supérieures à la température de dégradation du polypropylène constituant la matrice des première et deuxième peaux ainsi que des plis de renfort et de l'âme alvéolaire, sans pour cela de manière surprenante dégrader les caractéristiques mécaniques du panneau ainsi formé.

La température de chauffage de l'empilement pré-assemblé selon le procédé conforme à l'invention, est comprise entre une température basse permettant la soudure entre les première et deuxième peaux et l'âme alvéolaire, dans un temps compatible avec la production en grande série sans affaiblissement conséquent de l'âme alvéolaire dudit empilement, et une température maximum évitant une dégradation trop rapide du polypropylène.

L'ajout des plis de renfort dans l'empilement à thermoformer pour réaliser le panneau de structure renforcée selon le procédé conforme à l'invention, est possible car ce procédé possède une capabilité de chauffage suffisante pour réussir à souder les première et deuxième peaux d'épaisseurs différentes (due à l'ajout des renforts).

En effet, la quantité de chaleur transmise à travers les peaux et l'âme alvéolaire est inversement proportionnelle à l'épaisseur de la peau, à types de renforts et de couleurs identiques.

A une température et à un temps de chauffe donnés de l'empilement pré-assemblé, il est possible de souder une peau d'épaisseur donnée. Si la peau est trop peu épaisse, elle va atteindre une température telle qu'elle sera dégradée.

Si la peau est trop épaisse, la chaleur n'arrivera pas en quantité suffisante pour permettre la soudure entre la peau et l'âme.

Par exemple, pour souder une peau en tissu 4x1 de grammage égal à 915 g/m², à une âme alvéolaire, il est prévu un temps de chauffe compris entre 55 et 75 secondes. En utilisant une peau identique de grammage égal à 1420 g/m², il faut entre 70 et 85 secondes pour la souder à l'âme alvéolaire sans la dégrader. De même, il a été déterminé que pour une peau identique mais de grammage égal à 710 g/m², il faut entre soit 55 et 65 secondes pour la souder à l'âme alvéolaire sans la dégrader.

Ainsi, selon le procédé conforme à l'invention, pour un empilement comprenant des peaux d'un grammage égal environ à 915 g/m² avec des plis de renfort dont la masse surfacique est comprise entre 0 et 500 g/m² (donc pour une gamme de grammage comprise entre 915 et 1400 g/m²), le temps de chauffe de l'empilement pré-assemblé est compris entre 70 et 75 secondes.

Selon une dernière étape du procédé conforme à l'invention, après avoir chauffé l'empilement pré-assemblé dans un four, on forme ledit panneau par pressage dudit empilement chauffé dans un moule à froid sous une pression comprise entre 1 et 3.10⁶ Pa.

De manière préférentielle, la pression de formage du panneau est comprise entre 15 et 20.10⁵ Pa.

Le procédé selon l'invention comprend peu d'opérations qui sont simples et rapide à réaliser.

Il utilise des équipements standards (four, presse) pour réaliser les opérations précitées qui sont parfaitement maîtrisées, donc tout à fait adaptées à être mises en oeuvre dans le domaine de l'industrie automobile où les pièces sont formées à grande cadence de production tout en garantissant une qualité constante et une compétitivité économique.

Les panneaux réalisés selon l'invention présentent une rigidité optimisée localement sans présenter un surpoids par rapport aux panneaux ne comportant pas de plis de renfort, ni un surcoût de fabrication.

Une des applications avantageuses de tels panneaux de structure renforcée par des plis de renfort, est la réalisation de dossiers de banquettes arrières de véhicules automobiles et en particulier les dossiers de banquettes arrières avec ceintures embarquées.

Un tel dossier de banquette arrière comporte dans sa partie basse deux charnières d'articulation sur la carrosserie du véhicule, ces deux charnières sont positionnées sur les côtés extérieur et intérieur du dossier et permettant son rabattement vers l'avant, et dans une région située en haut sur le côté externe dudit dossier, un point d'ancrage de celui-ci sur la carrosserie du véhicule pour son maintien en position verticale.

En outre, lorsqu'il embarque la ceinture, il est prévu dans cette structure de dossier de siège arrière, un point d'ancrage situé en partie supérieure du côté interne dudit dossier, de manière opposée à son point d'accrochage sur la carrosserie du véhicule pour permettre l'installation à la place arrière du milieu d'une ceinture de sécurité à trois points d'ancrage de la même manière que pour les places arrières droite et gauche.

L'effort appliqué sur chaque point de fixation est très important.

Afin de résister à de tels efforts, sans pour cela trop alourdir le dossier de siège et limiter son coût de fabrication, il est particulièrement avantageux d'utiliser un panneau de structure renforcée réalisé selon la présente invention.

Sur les figures 2a à 2g, on a représenté différentes éprouvettes de test correspondant à des dossiers de banquette arrière 2/3, avec ceinture embarquée, qui comportent les points d'articulation, d'accrochage et d'ancrage précités, référencés successivement A à D.

Les différentes éprouvettes représentées sur les figures 2a à 2g ont été réalisées selon le procédé conforme à l'invention, et comportent un nombre de paires de plis de renfort différents.

L'éprouvette représentée sur la figure 2a comporte une seule paire de plis de renfort SE s'étendant entre le point d'accrochage haut externe A sur la carrosserie et le point de traction de la ceinture D,

L'éprouvette représentée sur la figure 2b comporte une seule paire de plis de renfort IE s'étendant entre la charnière d'articulation externe B et le point de traction de la ceinture D.

L'éprouvette représentée sur la figure 2c comporte une seule paire de plis de renfort II s'étendant entre la charnière d'articulation interne C et le point de traction de la ceinture D.

L'éprouvette représentée sur la figure 2d comporte deux paires de plis de renfort, une première paire de plis de renfort SE s'étendant entre le point d'accrochage externe haut A sur la carrosserie et le point de traction de la ceinture D, et une seconde paire de plis de renfort IE s'étendant entre la charnière d'articulation externe B et le point de traction de la ceinture D.

L'éprouvette représentée sur la figure 2e comporte deux paires de plis de renfort ont, une première paire de plis de renfort IE s'étendant entre la charnière d'articulation externe B et le point de traction de la ceinture D, et une deuxième paire de plis de renfort II entre la charnière d'articulation interne C et le point de traction de la ceinture D.

L'éprouvette représentée sur la figure 2f comporte deux paires de plis de renfort, une première paire de plis de renfort SE s'étendant entre le point d'accrochage haut externe A et le point de traction de la ceinture D, et une deuxième paire de plis de renfort II s'étendant entre la charnière d'articulation interne C et le point de traction de la ceinture D.

Enfin, l'éprouvette représentée sur la figure 2g comporte trois paires de plis de renfort, une première paire de plis de renfort SE s'étendant entre le point d'accrochage externe A et le point de traction de la ceinture D, une deuxième paire de plis de renfort IE s'étendant entre la charnière d'articulation externe B et le point de traction de la ceinture D, et une troisième paire de plis de renfort II s'étendant entre la charnière d'articulation interne C et le point de traction de la ceinture D.

Les caractéristiques des peaux et des plis de renfort pour les différentes éprouvettes précitées sont explicitées pour trois séries différentes dans le tableau ci-après.

| SERIE | 970616/S5 | 970616/S6 | 970616/S7 |
|---|---|---|---|
| **éprouvettes** | Figures 2a à 2g | Figures 2a à 2c | Figures 2a à 2g |
| **Peaux** | Tissu équilibré 1420 g/m² | Tissu équilibré 1420 g/m² | Tissu équilibré 1420 g/m² |
| **Renforts** | Tissu 4x1 400 g/m² | Mat orienté 4x1 500 g /m² | Unidirectionnel 800 g/m² |

Les essais sur les différentes séries d'éprouvettes ont consisté à exercer un effort de traction verticale grâce à un palan électrique sur chacune desdites éprouvettes, à la position du point d'ancrage supérieur de la ceinture D. Un premier capteur est fixé sur le bâti de support du palan, d'une part et au point de traction sur l'envers de l'éprouvette à tester d'autre part. Il doit mesurer la déplacement du point de traction. Un second capteur est fixé sur le bâti de support de palan d'une part, et au niveau du coin libre sur l'envers de l'éprouvette à tester d'autre part, il doit mesurer le déplacement du coin libre non fixé de la structure. En outre, un capteur d'efforts est intercalé entre le crochet du palan et l'éprouvette à tester de manière à mesurer l'effort de traction.

Les résultats d'essais sur les différentes éprouvettes précitées, ont montré que l'utilisation d'une seule paire de plis de renfort ne permettait pas d'améliorer significativement les résultats des essais d'éprouvettes constituées par des empilements sans plis de renfort.

Par contre, les éprouvettes comportant deux paires de plis de renfort semblent améliorer nettement les résultats d'essais. L'amélioration la plus flagrante est la réalisation de trois paires de plis de renfort (voir éprouvette figure 2g).

Elle permet d'atteindre et même de dépasser pour certains cas (voir série 970616/S7), les valeurs obtenues avec des peaux d'un grammage de 2130 g/m² prévues dans un empilement sans renfort, c'est-à-dire une résistance à un effort moyen de traction supérieur à 10 000 Newtons pour un déplacement moyen du coin libre d'environ 300 millimètres.

La surface des plis de renfort utilisés pour la réalisation de ces éprouvettes est environ de 0,04 m² par rapport à la surface de la peau qui est de l'ordre de 0,44 m².

Il est intéressant de noter, qu'un dossier de banquette arrière réalisé avec des peaux de grammage de fibres de verre égal à 1420 g/m² avec des plis de renfort réalisés en unidirectionnel avec un grammage de fibres de verre égal 800 g/m² présente un poids 1,31 kg et un coût de 33,32 FF.

Le même dossier de siège réalisé à l'aide d'un empilement n'utilisant pas de renfort mais des peaux présentant un grammage de fibres de verre égale à 2130 g/m², comporte une rigidité équivalente et présente un poids de 1,87 kg pour un coût de 46,86 FF.

Ainsi, l'utilisation des renforts selon la présente invention, permet de diminuer aussi bien le coût que le poids de la pièce pour des caractéristiques mécaniques équivalentes.

La présente invention n'est nullement limitée aux modes de réalisation décrits et représentés, mais l'homme du métier saura y apporter toute variante sans sortir du cadre de l'invention.

## Revendications

1. Procédé pour réaliser un panneau de structure composite renforcée du type sandwich à âme alvéolaire, **caractérisé en ce que** :
- on réalise un empilement d'au moins une première peau (110) en matériau thermoplastique renforcé, un premier pli de renfort (120) en matériau thermoplastique renforcé, une âme alvéolaire (130) en matériau thermoplastique, un second pli de renfort (140) en matériau thermoplastique renforcé, et une seconde peau (150) en matériau thermoplastique renforcé, les premier et second plis de renfort (120, 140) présentant une surface inférieure à celle des première et seconde peaux (110, 150) et étant positionnés de manière symétrique par rapport au plan formé par l'âme alvéolaire, à des endroits déterminés contre lesdites peaux,
- on pré-assemble l'empilement,
- on chauffe l'empilement pré-assemblé dans un four, et
- on forme ledit panneau par pressage dudit empilement chauffé dans un moule à froid, sous une pression comprise entre 1 et 3.10⁶ Pa.

2. Procédé selon la revendication 1, **caractérisé en ce que** ledit empilement comporte au moins une autre paire de troisième et quatrième plis de renfort, présentant chacun une surface inférieure à celle des première et deuxième peaux et disposés symétriquement de part et d'autre de l'âme alvéolaire à d'autres endroits déterminés contre lesdites peaux.

3. Procédé selon l'une des revendications 1 ou 2, **caractérisé en ce que** l'empilement comporte trois paires de plis de renfort agencées de manière déterminée, symétriquement de part et d'autre de l'âme alvéolaire.

4. Procédé selon l'une des revendications 1 à 3, **caractérisé en ce que** ledit empilement comporte au moins une couche de revêtement externe (161) en matériau tissé ou non tissé disposée sur la seconde peau (150).

5. Procédé selon la revendication 4, **caractérisé en ce que** ledit empilement comporte une autre couche de revêtement externe (162) en matériau tissé ou non tissé placée sous la première peau (110) dans l'ordre d'empilage.

6. Procédé selon l'une des revendications 1 à 5, **caractérisé en ce que** la pression de formage du panneau est comprise entre 15 et 20.10⁵ Pa.

7. Procédé selon l'une des revendications 1 à 6, **caractérisé en ce que** lors du formage dudit panneau, les première et deuxième peaux (110, 150) présentent une température de formage comprise entre 160 et 200 degrés environ.

8. Procédé selon l'une des revendications 1 à 7, **caractérisé en ce que** les première et deuxième peaux (110, 150) sont constituées par un tissu ou un mat de fibres de verre et d'un matériau thermoplastique.

9. Procédé selon l'une des revendications 1 à 8, **caractérisé en ce que** les plis de renfort (120, 140) sont constitués par un tissu ou un mat de fibres de verre et d'un matériau thermoplastique.

10. Procédé selon l'une des revendications 8 à 9, **caractérisé en ce que** les première et deuxième peaux (110, 150) présentent un grammage de fibres de verre différent de celui des plis de renfort (120, 140).

11. Procédé selon l'une des revendications 8 à 10, **caractérisé en ce que** le matériau thermoplastique est une polyoléfine de préférence du polypropylène.

12. Procédé selon l'une des revendications précédentes, **caractérisé en ce que** l'âme alvéolaire (130) présente une structure d'alvéoles ouvertes du type structure tubulaire ou nid d'abeilles, constituée principalement de polyoléfine et de préférence de polypropylène.

13. Panneau de structure composite renforcée du type sandwich à âme alvéolaire, réalisé conformément au procédé selon l'une des revendications 1 à 12.

## Patentansprüche

1. Verfahren zum Herstellen einer verstärkten Sandwich-Verbundplatte mit Wabenseele, **dadurch gekennzeichnet, daß**
- man einen Stapel aus mindestens einer ersten Haut (110) aus verstärktem, thermoplastischen Material, einer ersten Verstärkungslage (120) aus verstärktem, thermoplastischem Material, einer Wabenseele (130) aus thermoplastischem Material, einer zweiten Verstärkungslage (140) aus verstärktem, thermoplastischem Material und einer zweiten Haut (150) aus verstärktem, thermoplastischem Material herstellt, wobei die erste und zweite Verstärkungslage (120, 140) eine Oberfläche darbieten, die kleiner ist als die der ersten und zweiten Haut (110, 150) und bezüglich der Ebene, die durch die Wabenseele gebildet ist, symmetrisch an bestimmten Stellen gegen die genannten Häute angelegt sind,
- man den Stapel vormontiert,
- man den vormontierten Stapel in einem Ofen erwärmt, und
- man die genannte Platte durch Pressen des erwärmten Stapels in einer kalten Form unter einem Druck formt, der zwischen 1 und 3.10⁶ Pa liegt.

2. Verfahren nach Anspruch 1, **dadurch gekennzeichnet, daß** der genannte Stapel mindestens ein anderes Paar aus einer dritten und vierten Verstärkungslage aufweist, von denen jede eine Oberfläche aufweist, die kleiner ist als die der ersten und zweiten Haut, und die symmetrisch beiderseits der Wabenseele an anderen, bestimmten Stellen gegen die genannten Häute angelegt sind.

3. Verfahren nach einem der Ansprüche 1 oder 2, **dadurch gekennzeichnet, daß** der Stapel drei Paare von Verstärkungslagen aufweist, die in bestimmter Weise symmetrisch beiderseits der Wabenseele angeordnet sind.

4. Verfahren nach einem der Ansprüche 1 bis 3, **dadurch gekennzeichnet, daß** der genannte Stapel mindestens eine äußere Verkleidungslage (161) aus gewebtem oder nicht gewebtem Material aufweist, die über der zweiten Haut (150) angeordnet ist.

5. Verfahren nach Anspruch 4, **dadurch gekennzeichnet, daß** der genannte Stapel eine andere, äußere Verkleidungslage (162) aus gewebtem oder nicht gewebtem Material aufweist, die in der Reihenfolge der Stapelung unter der ersten Haut (110) angeordnet ist.

6. Verfahren nach einem der Ansprüchen 1 bis 5, **dadurch gekennzeichnet, daß** der Formpreßdruck der Platte zwischen 15 und 20.10⁵ Pa liegt.

7. Verfahren nach einem der Ansprüche 1 bis 6, **dadurch gekennzeichnet, daß** während der Formung der genannten Platte die erste und zweite Haut (110, 150) eine Formgebungstemperatur aufweisen, die etwa zwischen 160 und 200 Grad liegt.

8. Verfahren nach einem der Ansprüche 1 bis 7, **dadurch gekennzeichnet, daß** die erste und die zweite Haut (110, 150) von einem Gewebe oder einer Matte aus Glasfasern und einem thermoplastischen Material gebildet sind.

9. Verfahren nach einem der Ansprüche 1 bis 8, **dadurch gekennzeichnet, daß** die Verstärkungslagen (120, 140) von einem Gewebe oder einer Matte aus Glasfasern und einem thermoplastischen Material gebildet sind.

10. Verfahren nach einem der Ansprüche 8 oder 9, **dadurch gekennzeichnet, daß** die erste und die zweite Haut (110, 150) ein Glasfasergewicht aufweisen, das gegenüber dem der Verstärkungslagen (120, 140) verschieden ist.

11. Verfahren nach einem der Ansprüche 8 bis 10, **dadurch gekennzeichnet, daß** das thermoplastische Material ein Polyolefin bevorzugt des Polypropylens ist.

12. Verfahren nach einem der vorangehenden Ansprüche, **dadurch gekennzeichnet, daß** die Wabenseele (130) eine Struktur aus offenen Waben aufweist, die der Art nach die Struktur von Rohren oder Bienenwaben hat und hauptsächlich aus Polyolefin und bevorzugt aus Polypropylen gebildet ist.

13. Sandwich-Verbundplatte mit Wabenseele, die nach dem Verfahren gemäß einem der Ansprüche 1 bis 12 hergestellt ist.

## Claims

1. A method of making a reinforced composite panel of the sandwich type having a cellular core, said method being **characterized in that**:
a stack is formed that is made up of: at least one first skin (110) made of a reinforced thermoplastics material; a first reinforcing ply (120) made of a reinforced thermoplastics material; a cellular core (130) made of a thermoplastics material; a second reinforcing ply (140) made of a reinforced thermoplastics material; and a second skin (150) made of a reinforced thermoplastics material; each of the first and second reinforcing plies (120, 140) having a surface area that is smaller than the surface area of each of the first and second skins (110, 150), and said first and second reinforcing plies being positioned symmetrically about the plane formed by the cellular core at determined places against said skins;
the stack is pre-assembled;
the pre-assembled stack is heated in an oven; and
said panel is formed by subjecting the heated stack to cold-pressing in a mold, under a pressure lying in the range 1 × 10⁶ Pa to 3 × 10⁶ Pa.

2. A method according to claim 1, **characterized in that** said stack includes at least one other pair of third and fourth reinforcing plies, each of which has a surface area that is smaller than the surface area of each of the first and second skins, said third and fourth reinforcing plies being disposed symmetrically about the cellular core at determined places against said skins.

3. A method according to claim 1 or 2, **characterized in that** the stack includes three pairs of reinforcing plies organized in determined manner, symmetrically about the cellular core.

4. A method according to any one of claims 1 to 3, **characterized in that** said stack includes at least one outer covering layer (161) made of a woven or a non-woven fabric disposed on the second skin (150).

5. A method according to claim 4, **characterized in that** said stack includes another outer covering layer (162) made of a woven or a non-woven fabric placed under the first skin (110) in the stacking order.

6. A method according to any one of claims 1 to 5, **characterized in that** the forming pressure for forming the panel lies in the range 15 × 10⁵ Pa to 20 × 10⁵ Pa.

7. A method according to any one of claims 1 to 6, **characterized in that**, while said panel is being formed, the first and second skins (110, 150) have a forming temperature lying in the range approximately 160°C to 200°C.

8. A method according to any one of claims 1 to 7, **characterized in that** the first and second skins (110, 150) are constituted by a woven fabric or mat of glass fibers and of a thermoplastics material.

9. A method according to any one of claims 1 to 8, **characterized in that** the reinforcing plies (120, 140) are constituted by a woven fabric or mat of glass fibers and of a thermoplastics material.

10. A method according to claim 8 or 9, **characterized in that** the first and second skins (110, 150) have glass fiber weight per unit area that is different from that of the reinforcing plies (120, 140).

11. A method according to any one of claims 8 to 10, **characterized in that** the thermoplastics material is a polyolefin and preferably polypropylene.

12. A method according to any preceding claim, **characterized in that** the cellular core (130) of the panel has an open-celled structure of the tubular or honeycomb cell type, constituted mainly by polyolefin and preferably polypropylene.

13. A reinforced composite panel of the sandwich type having a cellular core, made by performing the method according to any one of claims 1 to 12.
